**Europäisches Patentamt**

**European Patent Office**

**Office européen des brevets**

(19)

(11) Numéro de publication: **0 038 728**
**B1**

(12) **FASCICULE DE BREVET EUROPEEN**

(45) Date de publication du fascicule du brevet:
12.10.83

(51) Int. Cl.³: **H 02 K 1/28, F 16 D 1/06**

(21) Numéro de dépôt: **81400483.4**

(22) Date de dépôt: **27.03.81**

(54) **Rotor d'alternateur.**

(30) Priorité: **17.04.80 FR 8008574**

(43) Date de publication de la demande:
**28.10.81 Bulletin 81/43**

(45) Mention de la délivrance du brevet:
**12.10.83 Bulletin 83/41**

(84) Etats contractants désignés:
**DE GB IT**

(73) Titulaire: **DUCELLIER & Cie, Echat 950, F-94024 Créteil Cedex (FR)**

(72) Inventeur: **Bodin, Daniel, Résidence Dorine Rue Lamartine, F-62630 Etaples (FR)**

(74) Mandataire: **Habert, Roger, DUCELLIER & Cie 2, rue Boulle Echat 950, F-94024 Creteil Cedex (FR)**

(56) Documents cités:
**EP-A-0 015 167**
**FR-A-1 187 680**
**FR-A-1 233 435**
**GB-A-1 208 006**
**US-A-2 852 843**

ACTCRUM AG

## Rotor d'Alternateur

La présente invention concerne un rotor d'alternateur de véhicules automobiles du type qui comporte deux roues polaires à griffes placées l'une en regard de l'autre et comportant chacune une partie de noyau profilée, autour de laquelle est disposée, entre les deux roues polaires à griffes, une bobine inductrice, l'ensemble étant maintenu, longitudinalement et en rotation sur une partie striée d'un arbre rotatif.

Tel qu'illustré sur la figure 2 de la demande EP-A 0015 167 dont le contęnu appartient à l'état de la technique d'après l'article 54 (3) de la CBE, l'immobilisation, en rotation, de l'ensemble constitué des deux roues polaires et de la bobine inductrice est obtenu par emmanchement des roues polaires sur une partie striée de l'arbre rotatif.

Ensuite, mais non visible sur la figure 2 de la demande EP-A 0015 167, le maintien longitudinal est obtenu par repoussage de la face extérieure de chaque roue polaire au niveau de l'alésage de la roue polaire, vers l'intérieur d'une gorge réalisée sur l'arbre.

Il est donc nécessaire dans de tels rotors connus de réaliser deux gorges dans l'arbre afin d'assurer l'immobilisation longitudinale, de plus le repoussage nécessite une opération de matriçage ce qui élève le prix de revient de tels rotors.

La présente invention a essentiellement pour but de diminuer le nombre d'opérations pour l'obtention d'un rotor du type précité, rotor caractérisé en ce que chaque partie de noyau profilée comporte sur sa surface libre opposée à la roue polaire qui lui est solidaire, coaxialement et dans le prolongement de l'alésage de la roue polaire une couronne de dimensions telles que sous l'effet d'une certaine pression axiale, les deux couronnes se déforment radialement en venant en contact, pour former un bourrelet apte à s'ancrer dans une gorge unique ménagée dans l'arbre rotatif au droit des faces libres des parties de noyau de façon à assurer le maintien longitudinal de l'ensemble sur l'arbre rotatif.

La description qui va suivre en regard des schémas annexés fera mieux comprendre comment l'invention peut être réalisée.

La figure 1 représente un rotor connu.

La figure 2 représente un rotor conforme à l'invention.

Les figures 3a et 3b représentent une roue polaire constituant un rotor conforme à l'invention.

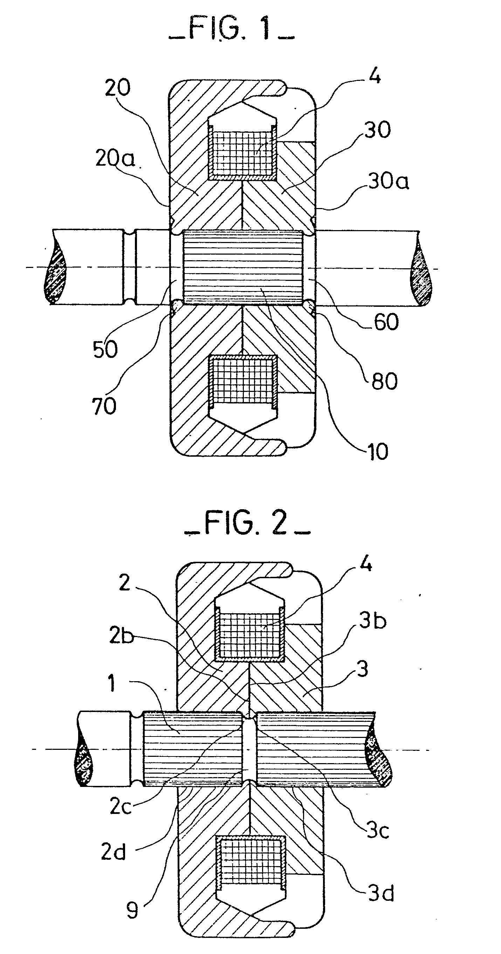

De façon connue selon la figure 1 le rotor est constitué d'un arbre rotatif 10 qui comporte deux gorges 50 et 60 de part et d'autre d'une partie striée autour de laquelle a été emmanché à force un ensemble constitué de deux roues polaires 20 et 30 comportant chacune un demi-noyau autour desquels, demi-noyau, est disposée une bobine 4 dans laquelle est bobiné un fil inducteur, un tel rotor subit ensuite des opérations de matricage sur les faces 20a et 30a des roues polaires de façon à faire pénétrer de la matière 70 et 80 de chaque roue polaire 20 et 30, respectivement dans les gorges 50 et 60.

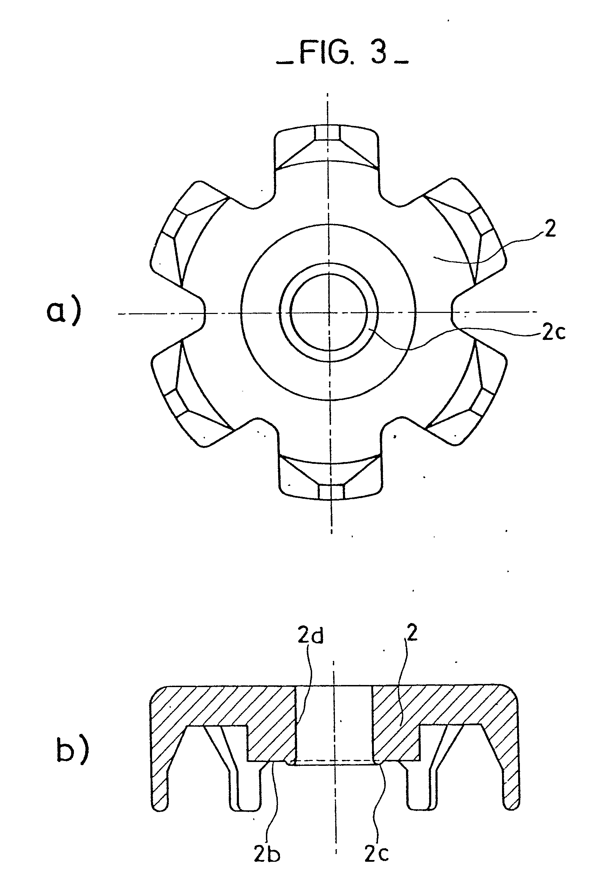

Conformément à l'invention selon les figures 2 et 3 l'arbre rotatif 1 ne comporte qu'une gorge 9 pour assurer le maintien longitudinal de l'ensemble constitué par les deux roues polaires 2 et 3 et par la bobine 4 équipée du fil inducteur.

De plus chaque roues polaires 2 et 3 comporte sur la face libre 2b, 3b de son demi-noyau une couronne 2c, 3c dans le prolongement des alésages 2d et 3d des roues polaires.

L'assemblage d'un tel rotor est alors réalisé sous une très haute pression qui assure d'une part l'emmanchement à force des roues polaires 2 et 3 sur la partie striée de l'arbre 1 et d'autre part l'écrasement des couronnes 2c et 3c qui forment un bourrelet, vers l'intérieur des alésages des roues polaires, ledit bourrelet vient épouser la gorge unique 9 de l'arbre 1, tout en assurant le contact entre les faces libres 2b et 3b des roues polaires.

Il suffit donc d'une seule opération pour assurer un tel assemblage.

De telles roues polaires permettent avantageusement de supprimer une gorge le long de l'arbre rotatif, et un outillage de matriçage.

De plus les défauts mécaniques qui pouvaient apparaitre dans les zones matricées telles que 70 et 80, ainsi que la pluralité des gorges le long de l'arbre de rotation sont sensiblement diminués de par la diminution d'opérations de déformation des matériaux constituants les différents éléments et notamment l'arbre 1 et les roues polaires 2 et 3.

Il est bien évident que des modifications pourront être apportées à une telle réalisation sans sortir pour cela du cadre de l'invention, en effet les couronnes 2c et 3c pourront se présenter de façon discontinue sous forme de bossages.

**Revendication**

Rotor d'alternateur de véhicules automobiles, du type qui comporte deux roues polaires (2, 3) à griffes placées l'une en regard de l'autre et comportant chacune une partie de noyau profilée, autour de laquelle est disposée, entre les deux roues polaires (2, 3) à griffes, une bobine inductrice (4), l'ensemble étant maintenu, longitudinalement et en rotation sur une partie striée d'un arbre rotatif (1), rotor caractérisé en ce que chaque partie de noyau profilée comporte, sur sa surface libre (2b, 3b) opposée à la roue polaire qui lui est solidaire, coaxialement et dans le prolongement de l'alésage (2d, 3d) de la roue polaire (2, 3) une couronne (2c, 3c) de dimensions telles que sous l'effet d'une certaine pression axiale, les deux couronnes (2c, 3c) se déforment radialement en venant en contact, pour former un bourrelet apte à s'ancrer dans une gorge unique (9) ménagée dans l'arbre rotatif (1) au droit des faces libres des parties de noyau de façon à assurer le maintien longitudinal de l'ensemble (2, 3 et 4) sur l'arbre rotatif (1).

**Patentanspruch**

Rotor für einen Kraftfahrzeug-Wechselstromgenerator mit zwei Klauen-Polrädern (2, 3), die einander gegenüberliegend angeordnet sind und jeweils ein profiliertes Kernteil umfassen, um welches herum eine zwischen den beiden Klauen-Polrädern (2, 3) liegende Induktionswicklung angeordnet ist, wobei die Gesamtheit der genannten Teile in longitudinaler Richtung sowie in Drehrichtung auf einem mit Riefen versehenen Teil einer drehbaren Welle (1) fixiert ist, dadurch gekennzeichnet, dass jedes der genannten profilierten Kernteile an seiner freien Oberfläche (2b, 3b), welche von dem fest mit ihm verbundenen Polrad weggewandt ist, einen koaxial und in Verlängerung der Wellenbohrung (2d, 3d) des Polrades (2, 3) angeordneten Kranz (2c, 3c) aufweist, der so bemessen ist, dass die Kränze (2c, 3c) der beiden Polräder sich bei Anwendung eines vorgebenen axialen Drucks radial verformen und miteinander in Kontakt kommen und gemeinsam einen Wulst bilden, der zur Sicherstellung der longitudinalen Fixierung der Teile (2, 3, 4) auf der Drehwelle in einer einzigen in der Drehwelle (1) am Ort der freien Oberfläche der Kernteile angebrachten Kehle (9) verankerbar ist.

**Claim**

Rotor for an alternator of automobile vehicles, of the kind which comprises two pole wheels (2, 3) equipped with claws, positioned one opposite the other and each comprising a profiled core part around which is arranged, between the two pole wheels (2, 3) equipped with claws, an induction coil (4), the whole being secured longitudinally and in rotation on a grooved part of a rotary shaft (1), said rotor being characterised in that each profiled core part has a ring (2c, 3c) situated on its free surface (2b, 3b) opposite to the pole wheel with which it is integral, coaxially and in the extension of the bore (2d, 3d) of the pole wheel (2, 3) and of such dimensions that under the action of a particular axial thrust, the two rings (2c, 3c) are deformed radially on coming into contact, so as to form a bead or roll able to be anchored in a single groove (9) proviede in the rotary shaft (1) normal to the free surfaces of the core parts in such a manner as to assure longitudinal retention of the assembly (2, 3 and 4) on the rotary shaft (1).

_FIG. 1_

_FIG. 2_

_FIG. 3_

a)

b)